# EUROPEAN PATENT SPECIFICATION

(11) **EP 0 629 229 B1**
(45) Date of publication and mention of the grant of the patent: **10.07.1996**
(21) Application number: 93906409.3
(22) Date of filing: 03.03.1993
(51) Int. Cl.: C09K 5/04

(54) **NON-AZEOTROPIC REFRIGERANT MIXTURE OF R23, R125 AND R32**
NICHTAZEOTROPE KAELTEMITTELMISCHUNG AUS R23, R125 UND R32
MELANGE REFRIGERANT NON AZEOTROPE DE R23, R125 ET R32

(30) Priority: 03.03.1992 US 845076
(43) Date of publication of application: 21.12.1994
(73) Proprietor: UNIVERSITY OF MONCTON, Moncton, New Brunswick E1A 3E9 (CA)
(72) Inventor: SAMI, Samuel, Moncton, New Brunswick E1G 2A9 (CA)
(74) Representative: Spall, Christopher John
(86) International application number: CA9300082
(87) International publication number: WO9318110

(56) References cited:
- EP-A- 0 430 171
- WO-A-92/15658
- WO-A-92/16597
- DE-A- 4 116 274
- US-A- 5 066 410

## Description

### 1. Technical Field:

This invention relates to a non-azeotropic refrigerant mixture, suitable as a working fluid for heat pump applications as well as in other vapour compression machines. By use of this mixture, the cooling and heating efficiencies of heat pumps can be significantly improved. The mixture is entirely compatible with R22 and R502 refrigerants currently used in heat pumps, and so does not require changes in the design of such heat pumps. R22 is chlorodifluoromethane (CHCLF₂) and R502 is a mixture of R22 and R115 which is chloropentafluoroethane (CHCF₂CHF₃). However, other vapour compression equipment can use the mixture as a drop-in replacement for presently used refrigerants, depending on the mixture composition. In addition, with these compositions, the mixture is environmentally acceptable.

### 2. Background Art:

### a) General

The thermodynamic performance of an energy conversion device may be improved by using a non-azeotropic mixture in a vapour cycle. A non-azeotropic mixture has a temperature distribution parallel to that of the surrounding fluid with which heat transfer takes place during the evaporation and condensation processes which are part of the cycle. Interest has increased in recent years in the use of non-azeotropic refrigerant mixtures (NARM) to improve the performance of energy conversion devices.

### b) Prior Art

Various NARM have been proposed or used in the past. Usually, these have two components, but some having three (i.e. ternary mixtures) have been proposed, for example in:
U.S. Patent No. 4,344,292 (Rojey) - issued August 17, 1982
U.S. Patent No. 4,680,939 (Rojey) - issued July 21, 1987
U.S. Patent No. 4,810,403 (Bivens) - issued March 7, 1989
U.S. Patent No. 4,812,250 (Ambrosino et al.) - issued March 14, 1989
U.S. Patent No. 4,978,467 (Shankland) - issued December 18, 1990
U.S. Patent No. 5,049,296 (Gu) - issued September 17, 1991
U.S. Patent No. 5,053,155 (Maher) - issued October 1, 1991
U.S. Patent No. 5,059,338 (Yoshida) - issued October 22, 1991
European Patent Application No. 419,042 (Pearson) - published March 27, 1991
European Patent Application No. 451,692 (Omure et al.) - published October 16, 1991
European Patent Application No. 430,169 (Yoshida et al.) - published June 5, 1991
European Patent Application No. 430,171 (Yoshida et al.) - published June 5, 1991

In our co-pending PCT Application Serial No. PCT/CA92/00208, filed May 15, 1992, there is described a ternary non-azeotropic mixture of 4% to 10% trifluoromethane (R23), 4% to 30% of 1, 1-difluoroethane (R152a) with the balance of chlorodifluoromethane (R22). This may have improved properties compared to pure R22, and is more environmentally acceptable than R22 since the amount of chlorine in the refrigerant is reduced, being only present in the R22. However, recently published information suggests that R22 may have more negative impact on the ozone layer and the greenhouse effect than previously estimated.

The present invention provides a ternary non-azeotropic mixture which has similar advantages over R22 as does the mixture of PCT Serial No. PCT/CA92/00208 but in which no chlorinated compounds are used; instead the mixture contains only hydrofluorocarbons (HFC's), such as pentafluoroethane (R125) and methylene fluoride (R32), also known as difluoromethane. Since the mixture of this invention contains no chlorine it is environmentally safe. R125 has a molecular weight of 120.02 and boils at -48.50°C; it is non-flammable. R32 has a molecular weight of 79.20 and boils at -51.61°C and is non-flammable at concentrations not higher than 65% in a mixture. The third component, R23, has a molecular weight of 70.02 and boils at -82.06°C and is non-flammable.

### 3. Disclosure of Invention:

The present invention provides a unique non-azeotropic refrigerant mixture containing R23, R125, and R32 refrigerants which has a remarkably good coefficient of performance without sacrificing either thermal capacity or environmentally desirable properties.

In accordance with one aspect of the present invention, a refrigerant for use in a heat pump or other equipment designed for R22 or R502, without modification of the equipment, comprises a ternary non-azeotropic mixture of known refrigerants, as follows:

| | |
|---|---|
| R23 (CHF₃; trifluoromethane) | 1% to 20% |
| R125 (CHF₂CF₃; pentafluoroethane) | 1% to 70% |
| R32 (CH₂F₂; methylene fluoride or difluoromethane) | Balance |

All references to percentage composition given herein are by weight.

The precise composition of the mixture will vary with particular working conditions; however the mixtures will all be within this broad range to avoid degraded performance, high condenser operating pressures which are incompatible with existing equipment, and flammability of the mixture. The following are examples of preferred ranges and compositions.

| | **R-23** | **R-125** | **R-32** |
|---|---|---|---|
| | 1-10% | 1-70% | Balance |
| | 2-20% | 2-50% | Balance |
| | 2-10% | 10-40% | Balance |
| | 3-10% | 30-50% | Balance |
| Composition (a) | 5% | 30% | 65% |
| Composition (b) | 5% | 40% | 55% |
| Composition (c) | 5% | 70% | 25% |

### 4. Brief Description of the Drawings

Reference will be made to the following drawings for a better understanding of non-azeotropic mixtures and the particular mixtures of this invention, i.e.:
Fig. 1 are graphs showing how coefficient of performance for refrigeration changes with temperature for pure refrigerant R22; R502 which is a mixture of R22 and R115 having a boiling point of -45.44°C and molecular weight 111.63; and mixtures in accordance with the invention;
Figs. 2 through 6 show graphs of performance characteristics vs temperature at the inlet to the liquid evaporator, for the different refrigerant compositions shown above;
Figs. 7 and 8 show how the coefficient of performance of a heat pump varies with volumetric cooling capacity for different refrigerants;
Fig. 9 shows a graph of pressure against temperature for different refrigerants;
Figs. 10 and 11 show graphs of the volumetric capacity for heating and cooling respectively, against temperature, both for Applicant's mixture and mixtures of other HFC's; and
Fig. 12 shows a graph of pressure against temperature for the same mixtures as Figs. 10 and 11.

### 5. Detailed Description:

### a) The Behaviour of a Non-Azeotropic Mixture

An azeotropic mixture of two substances or more cannot be separated into its components by distillation. Such a mixture evaporates and condenses as a single substance with properties that are different from these of either constituent. Whereas pure substances or azeotropic mixtures have a constant phase changing temperature (e.g. boiling point) at a given pressure, a non-azeotropic mixture condenses and boils over a temperature range by an isobaric heating process.

### b) Desirable Properties in Non-Azeotropic Refrigerant Mixtures are as follows:

### Thermodynamic Properties

1. Low condensing pressure
2. Low boiling temperature
3. Low freezing temperature
4. High latent heat of vaporization
5. Proper P-x-T relationship
6. Low vapour and liquid specific volumes
7. Low specific heat of liquid
8. Low specific heat of vapour

### Physical Properties

1. High thermal conductivity of vapour
2. Low viscosity
3. Low molecular weight
4. High equilibrium mixing and solubility
5. Solubility with water
6. Solubility with lubricating oil
7. Stability

### Chemical Properties

1. Low degrading aspects (i.e. low Greenhouse Depletion Potential)
2. Low ozone compatibility (i.e. low Ozone Depletion Potential)

### Safety Properties

1. Non-flammable and non-explosive
2. Non-toxic
3. Weak odour

### Economic Properties

1. Low cost and ready availability
2. High overall heat transfer coefficient

### Specific Properties

1. Highly non-azeotropic combination
2. High coefficient of performance (COP)
3. Low volumetric cooling capacity
c) Thermodynamic Properties of Mixture

The Carnhan-Starling-DeSantis (CDS) equation of state has been employed to calculate the thermodynamic properties of the proposed non-azeotropic mixtures in the different phases. Tables 1, 2 and 3 give the thermodynamic properties including temperatures during evaporation and condensation at various pressures. The Tables are for the following preferred compositions (see above):

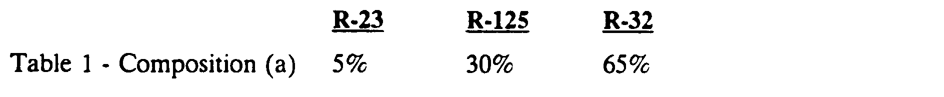

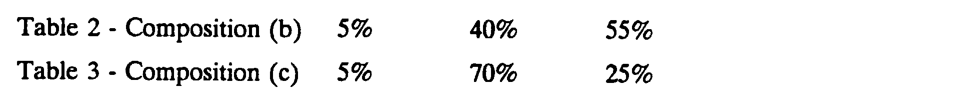

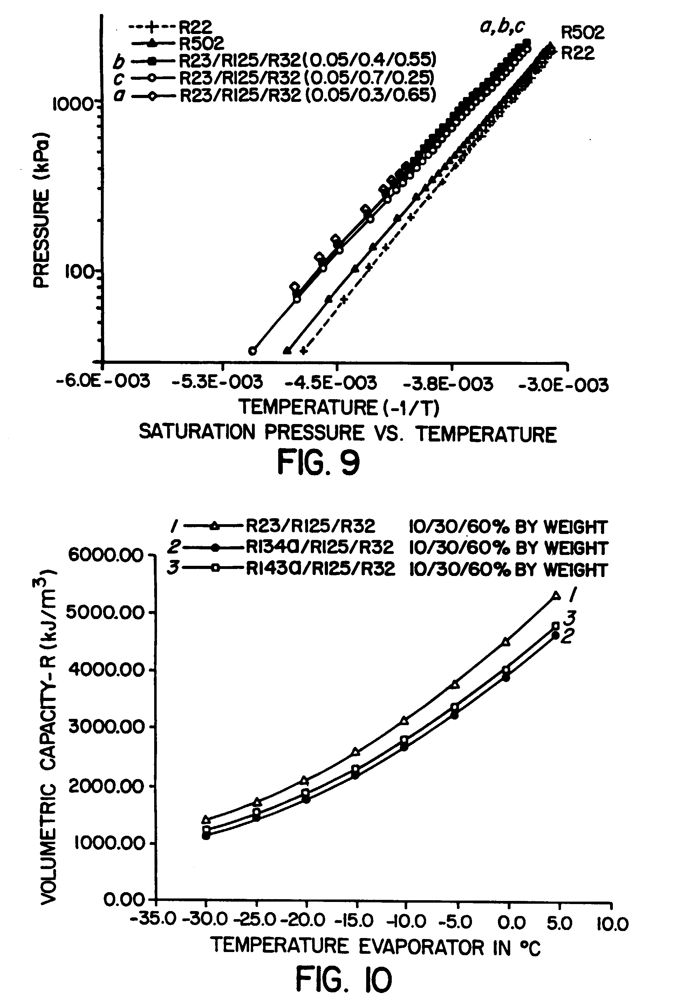

Fig. 9 shows that the proposed compositions behave as a homogenous refrigerant over the investigated range having pressure/temperature characteristics similar to R22 and R502. This is a significant characteristic, since handling and packaging expose the refrigerant to various temperatures. The similarity to R22 and R502 means that standard equipment which uses R22 or R502 can utilize this mixture without modification.

### d) Environmental Properties

With the concentration of R32 (methylene fluoride or difluoromethane) in the mixture not higher than about 65% by weight, the proposed non-azeotropic mixture is non-flammable.

The proposed mixture is an environmentally friendly refrigerant because of the following characteristics:
- Mixture components R23, R32 and R125 each have zero Ozone Depletion Potential (ODP).
- The three components R23, R32 and R125 also have very low Greenhouse Depletion Potential (GDP) of less than 0.1.

### e) Comparison with Other Refrigerants:

Performance of Mixture

The mixtures of the said refrigerants as described herein has been found to result in very desirable mixtures in attaining low evaporating temperatures and a reasonable head pressure and can be used with conventional heat pumps or other machines designed for R22 and/or R502 without the requirement for any major modifications or change in equipment.

The performance of an air/air heat pump using the mixture has been assessed by experiments. This heat pump comprises an air/refrigerant evaporator into which the mixture is introduced and from which it is discharged to a hermetic compressor for compressing the vapour mixture into an air finned condenser. After condensation, the mixture is discharged to an expansion valve; it is finally expanded through the expansion valve and recycled to the evaporator.

Evaluations of performance have been made with the refrigerant mixtures using air temperatures at the evaporator from -30°C to 5°C at constant air temperature of 27°C at the inlet to the air condenser.

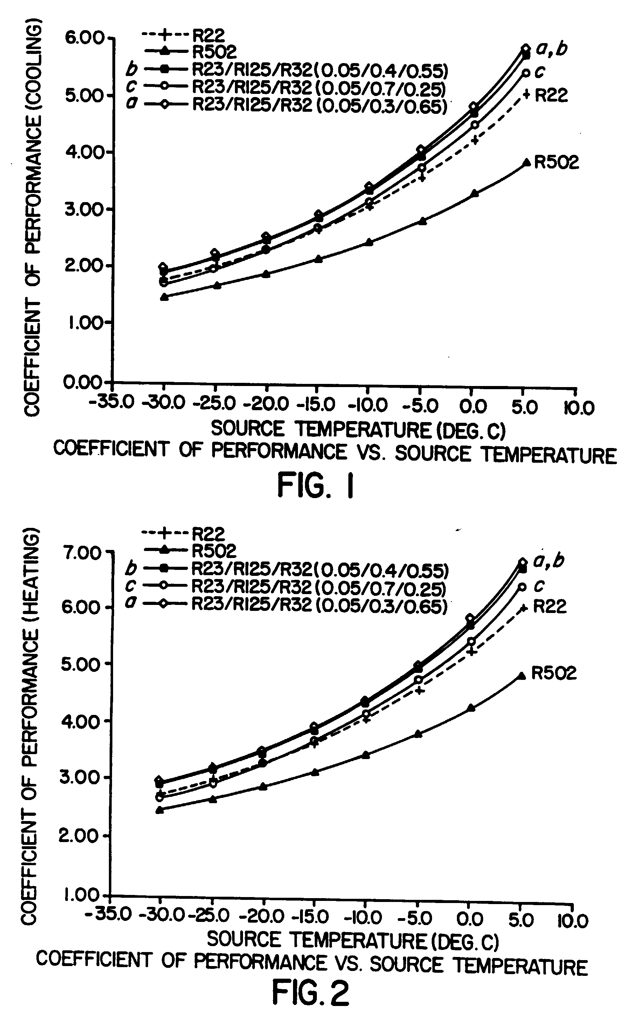

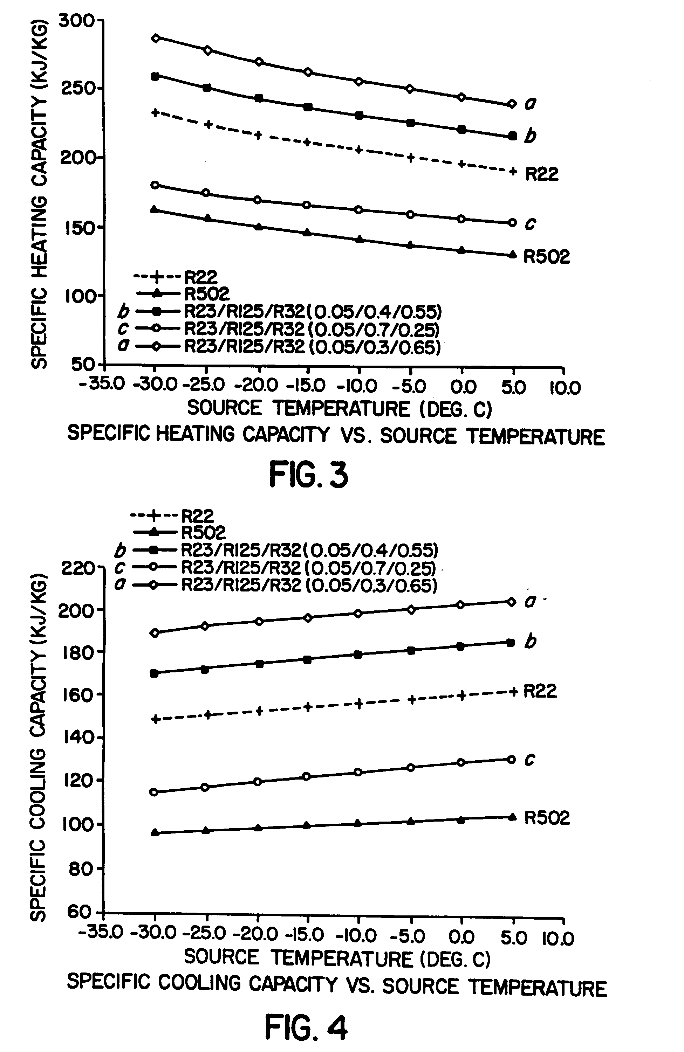

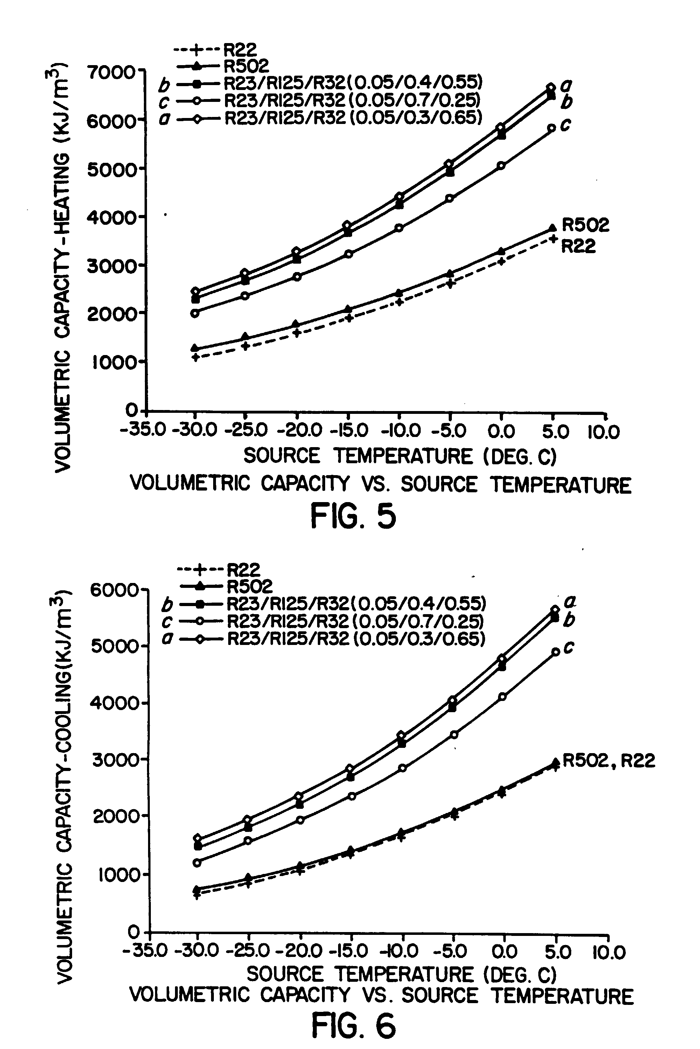

The series of results illustrated in Figs. 1 to 6 show the experimental results obtained with pure R22, then with pure R502, and then with mixtures or R23/R125/R32 at composition percentages of 5/30/65; 5/40/55; and 5/70/25. These results indicate a higher performance than with R22 and R502; this performance can be significantly improved with more careful choice of the composition ratios to suit particular temperature applications.

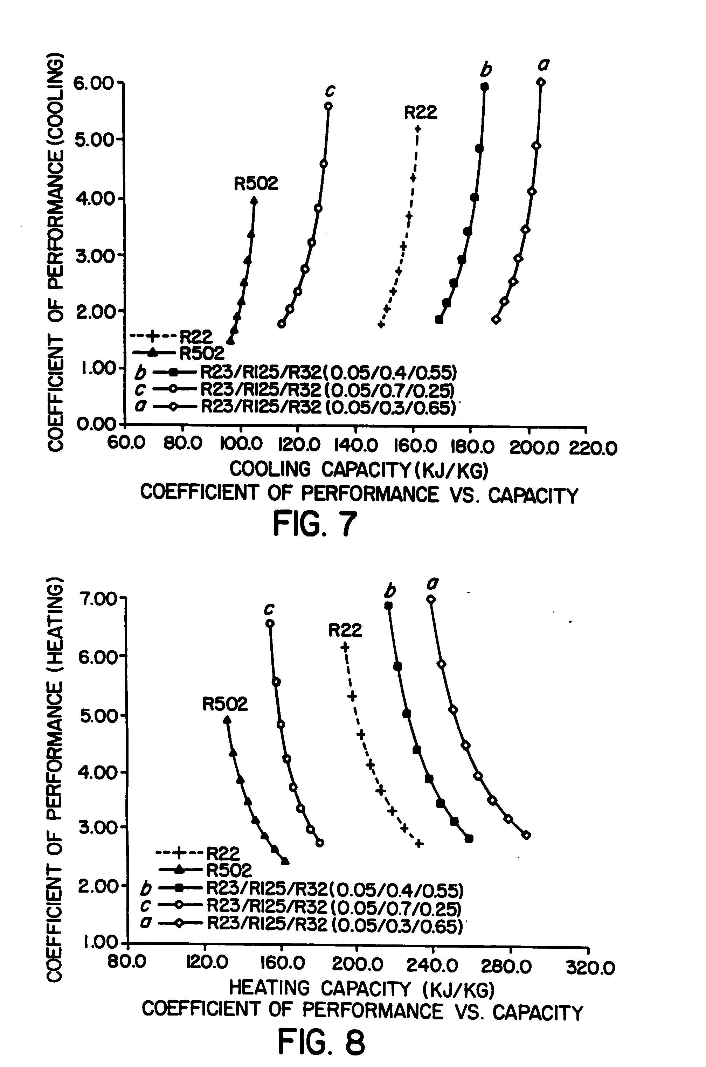

Samples of further performance results, obtained at entering air temperature to the evaporator from -30°C to 5°C and air entering temperature to the condenser of 35°C are displayed in Figs. 7 and 8. The coefficient of performance (COPR) shown in Figs. 1 through 8 is defined as the ratio of the heat powder delivered by the heat pump to the electric power consumed by the motor which drives the compressor. Fig. 9 shows the proposed mixture of the present invention, containing R23/R125/R32; which in the high temperature range has properties higher than that of pure R22. However, these proposed concentrations can be employed in equipment designed for R22, since their head pressure is below the equipment design pressure.

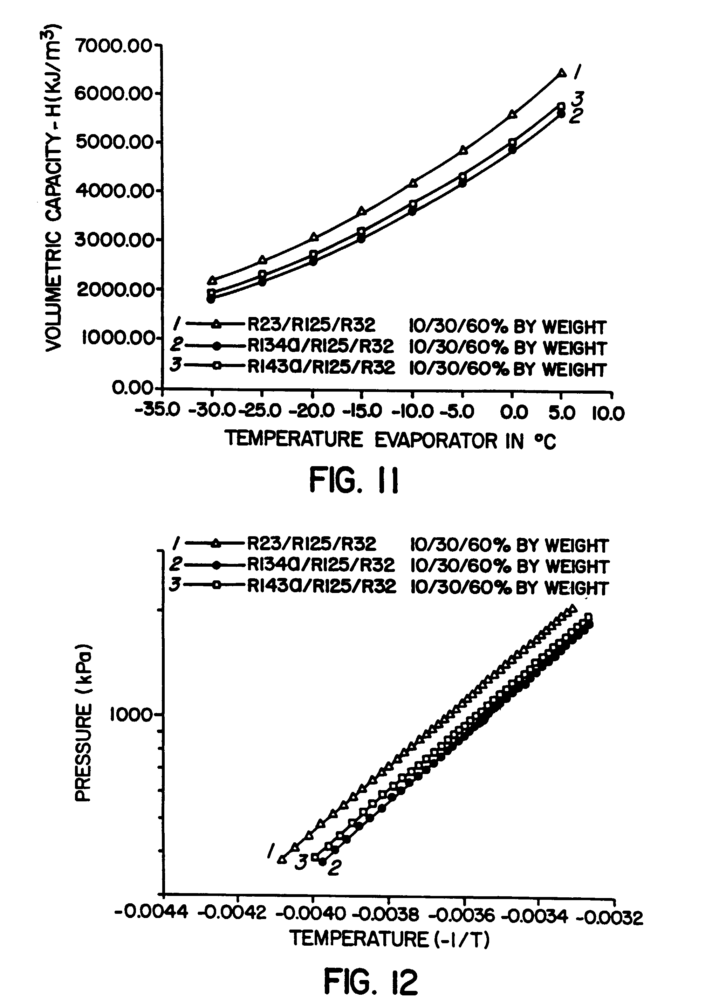

Figs. 10 through 12 show a comparison between a mixture of R23/R125/R32 at 10%/30%/60% composition, in accordance with this invention (shown at (1) on the graph), and mixtures derived from the above-mentioned European Patent Application No. 451,692 of Omure et al. This latter patent application discloses various mixtures of HFC's, but for purposes of comparison mixtures of R134a/R125/R32 and R143a/R125/R32 at 10%/30%/60% were chosen. Fig. 10 shows volumetric capacity in heating, Fig. 11 shows volumetric capacity in cooling, and Fig. 12 shows pressure/temperature characteristics. It is notable that in Figs. 10 and 11 the volumetric capacity of the inventive mixture, which is an important measure of the efficiency of a refrigerant, is superior to those of Omure at al. Furthermore, it may be noted that Omure et al. proposes compositions intended as replacements for R11 and R12, not R22 or R502.

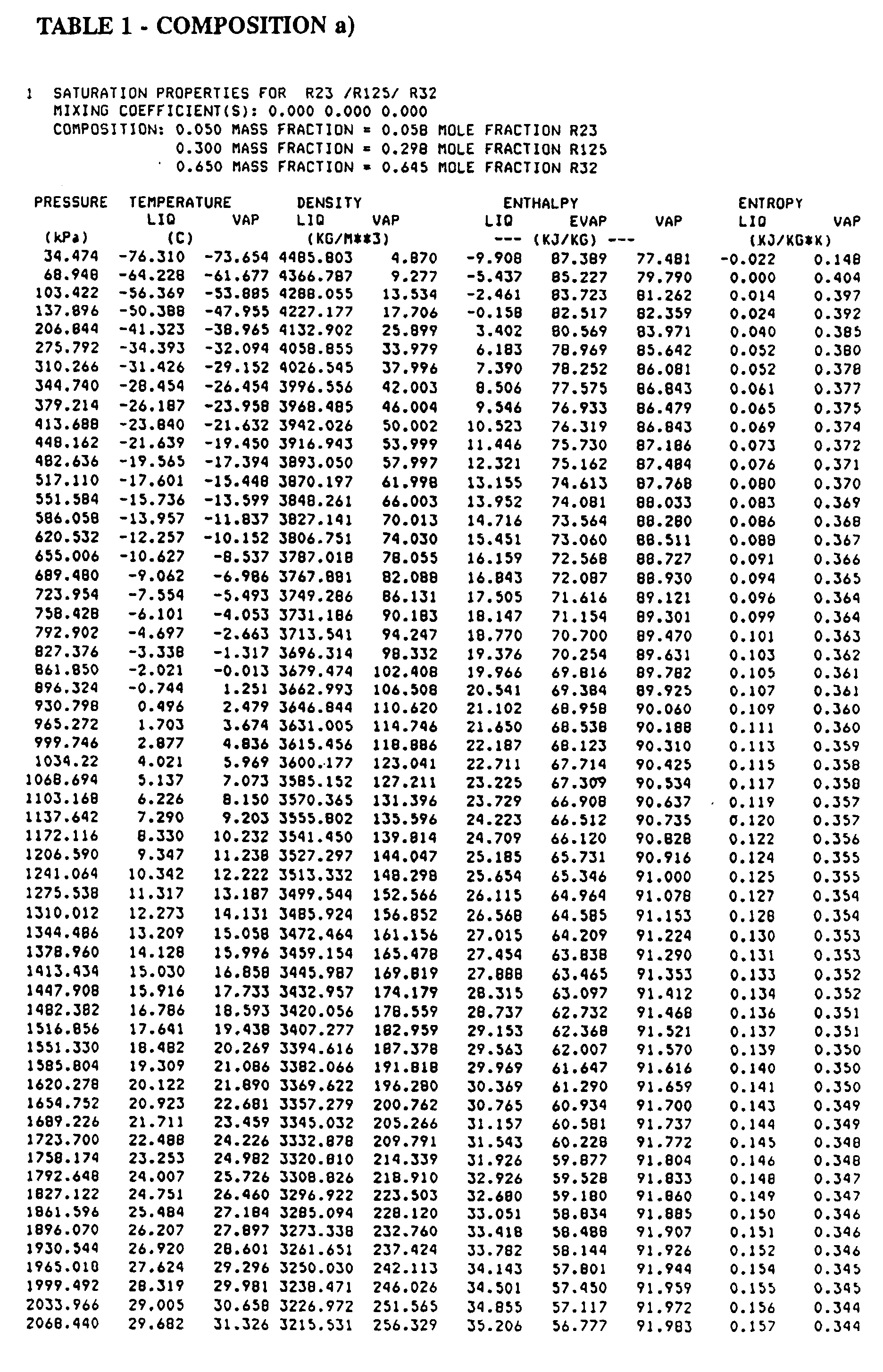

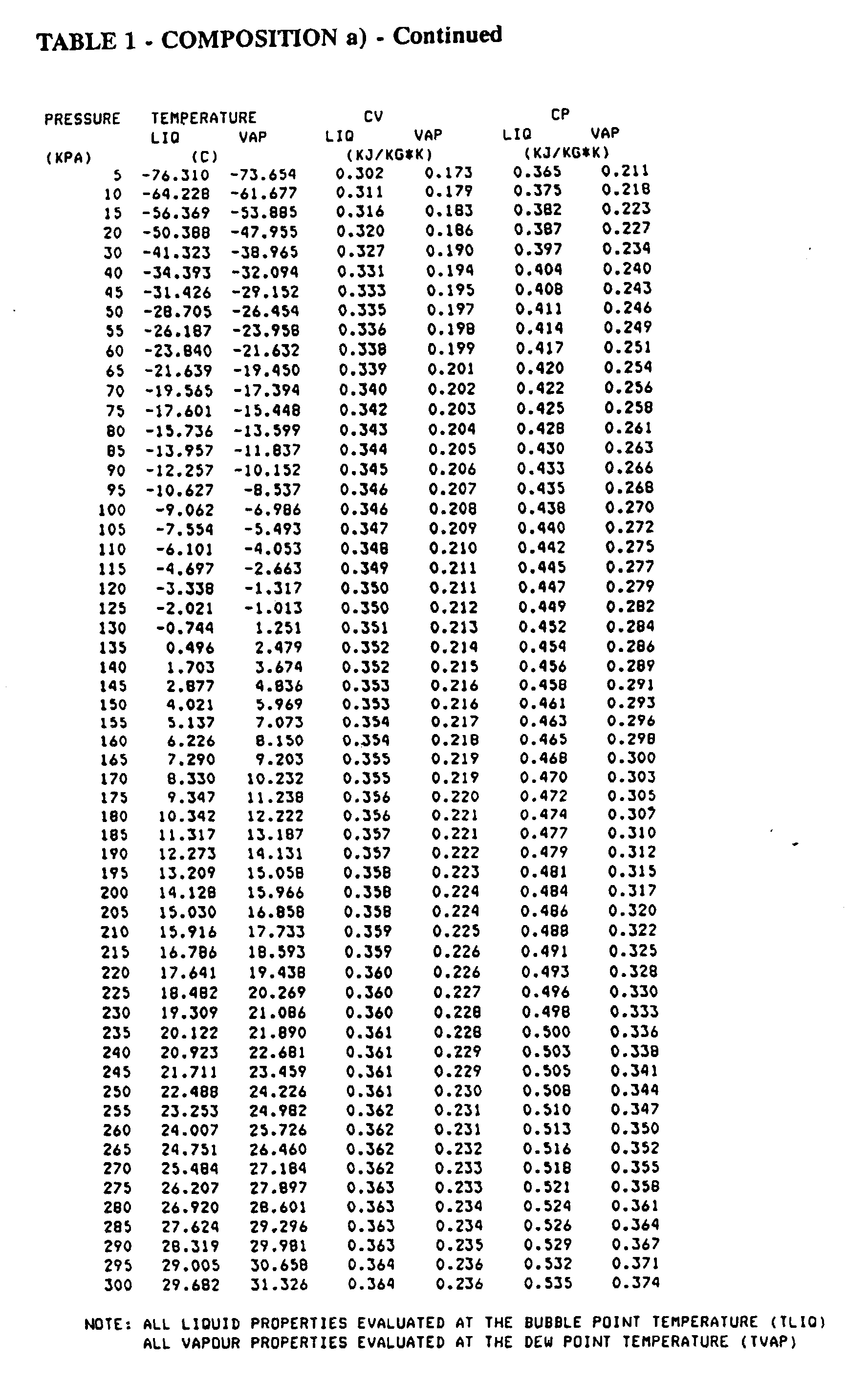

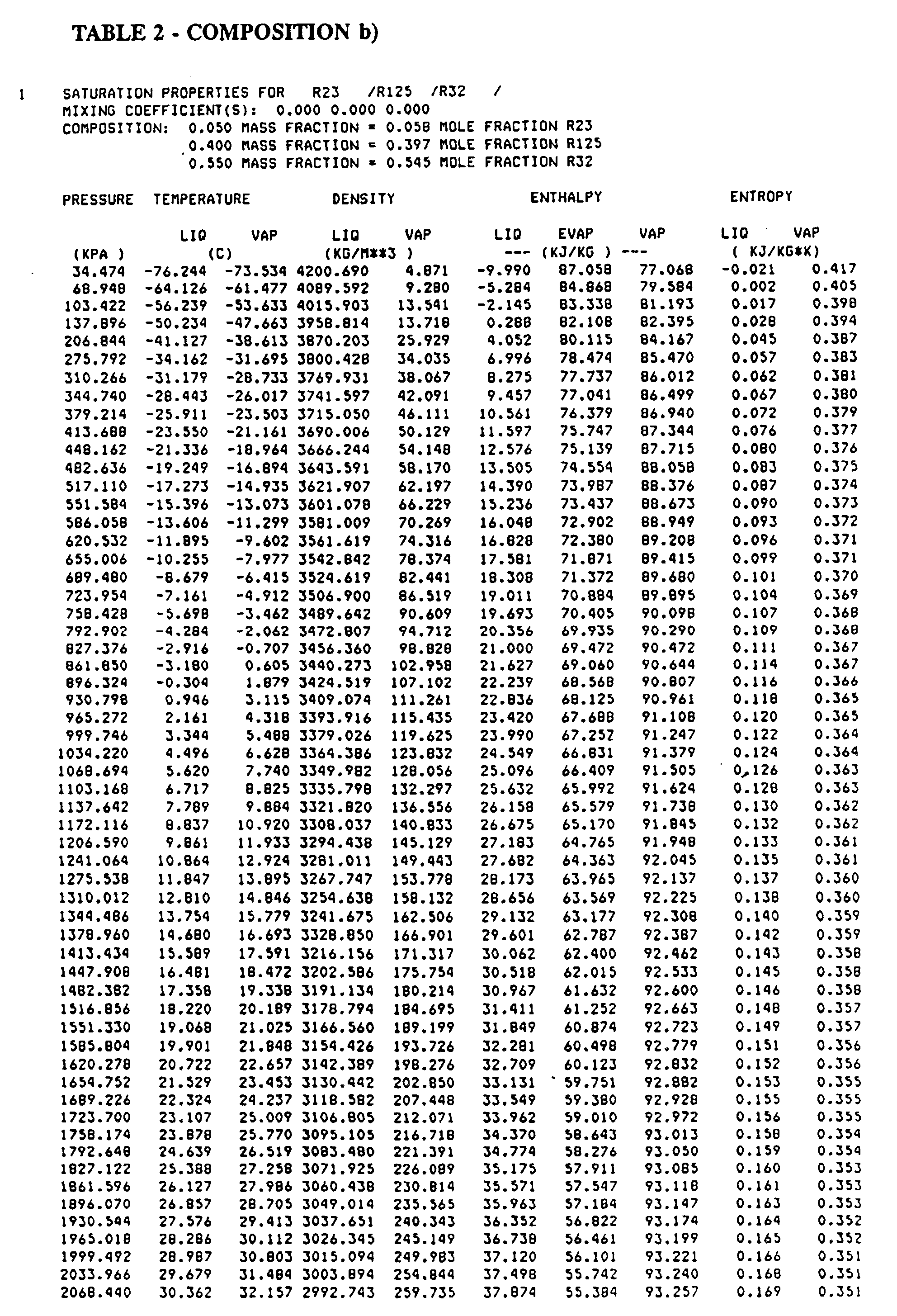

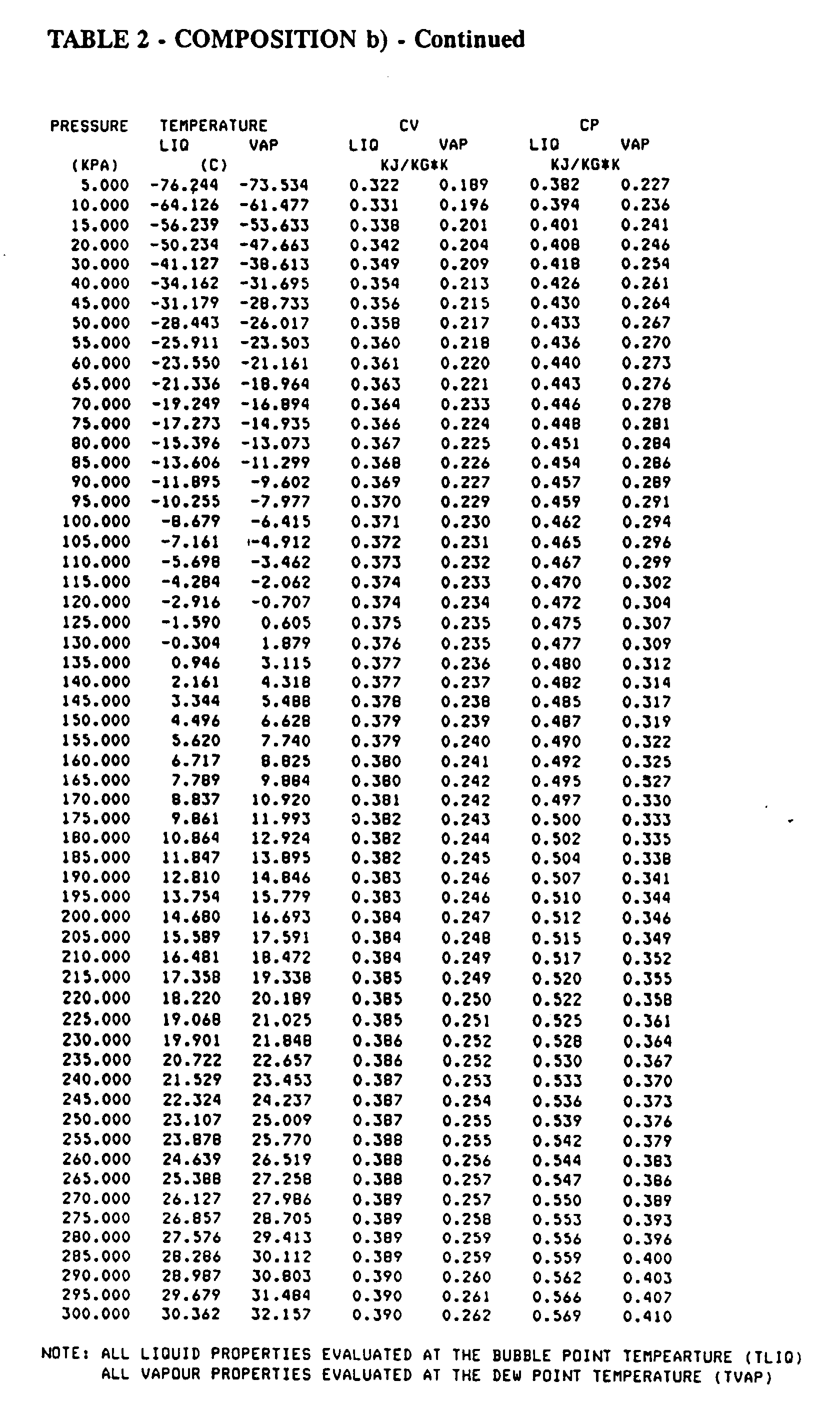

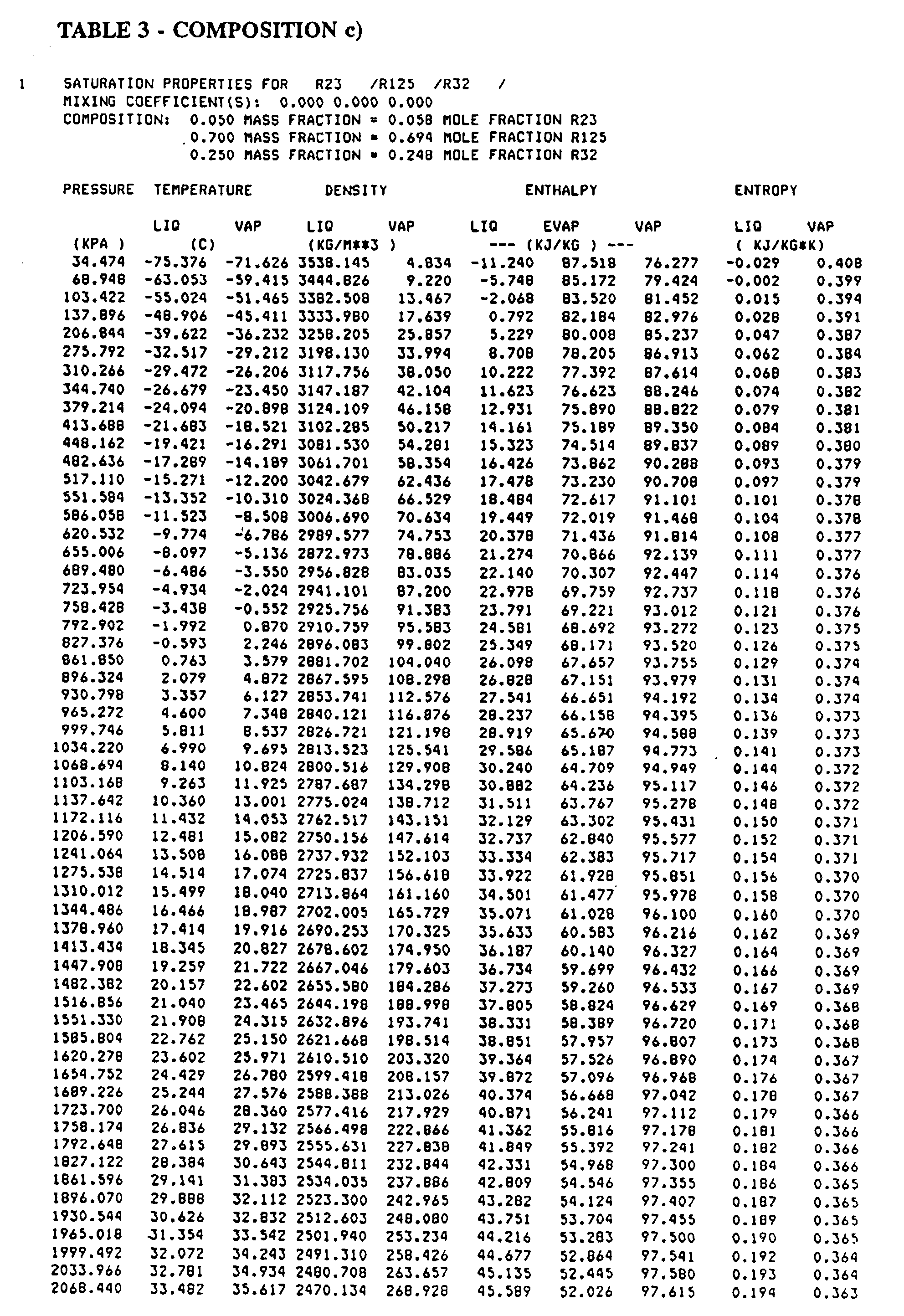

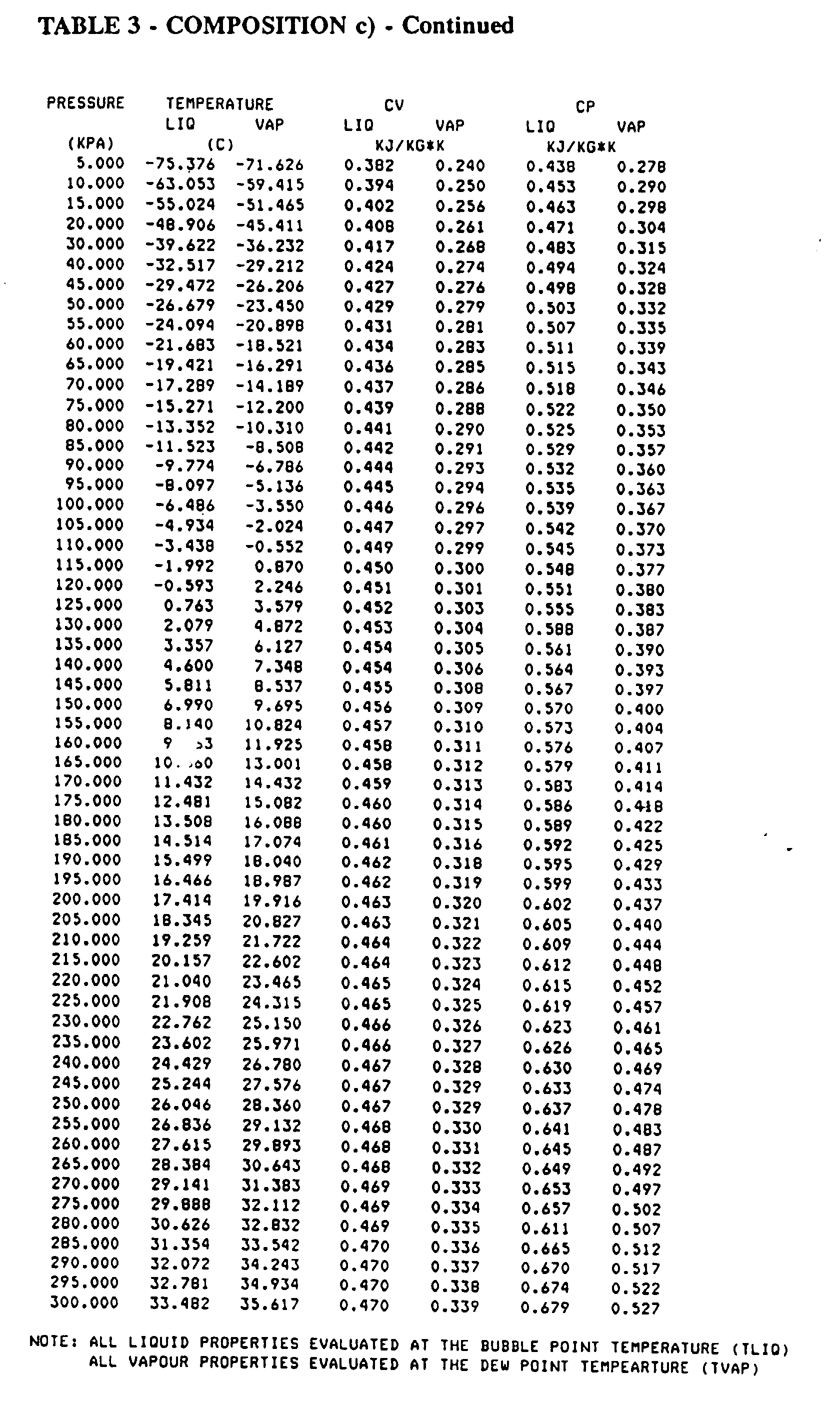

## Claims

1. A non-azeotropic refrigerant mixture, capable of being used in equipment designed for R22 or R502 without modification of said equipment, characterized in that it is a ternary mixture consisting essentially of:
| | |
|---|---|
| trifluoromethane (R23) | 1% to 20% |
| pentafluoroethane (R125) | 1% to 70% |
| difluoromethane (methylene fluoride; R32) | Balance |

2. A non-azeotropic refrigerant mixture according to claim 1, consisting essentially of:
| | |
|---|---|
| R23 | 1% to 10% |
| R125 | 1% to 70% |
| R32 | Balance |

3. A non-azeotropic refrigerant mixture according to claim 1, consisting essentially of:
| | |
|---|---|
| R23 | 2% to 20% |
| R125 | 2% to 50% |
| R23 | Balance |

4. A non-azeotropic refrigerant mixture according to claim 1, consisting essentially of:
| | |
|---|---|
| R23 | 2% to 10% |
| R125 | 10% to 40% |
| R32 | Balance |

5. A non-azeotropic refrigerant mixture consisting essentially of:
| | |
|---|---|
| R23 | 3% to 10% |
| R125 | 30% to 50% |
| R32 | Balance |

6. A heat transfer process using a heat pump, and wherein a refrigerant is successively evaporated while extracting heat from a heat source and condensed while giving heat to receiving fluid, wherein the refrigerant is a non-azeotropic ternary mixture, capable of being used in a heat pump designed for R22 or R502 without modification of the heat pump, characterized in that said mixture consists essentially of:
| | |
|---|---|
| trifluoromethane (R23) | 1% to 20% |
| pentafluoroethane (R125) | 1% to 70% |
| difluoromethane (methylene fluoride; R32) | Balance |

7. A heat transfer process according to claim 6, wherein said refrigerant mixture consists essentially of:
| | |
|---|---|
| R23 | 1% to 10% |
| R125 | 1% to 70% |
| R23 | Balance |

8. A heat transfer process according to claim 6, wherein said refrigerant mixture consists essentially of:
| | |
|---|---|
| R23 | 2% to 20% |
| R125 | 2% to 50% |
| R32 | Balance |

9. A heat pump characterized by having a refrigerant as claimed in claim 1.

10. A heat pump characterized by having a refrigerant as claimed in claim 2.

11. A heat pump characterized by having a refrigerant as claimed in claim 3.

12. A heat pump characterized by having a refrigerant as claimed in claim 4.

## Patentansprüche

1. Nicht-azeotropes Kühlmittelgemisch, welches in für R22 oder R502 ausgelegten Anlagen ohne Modifizierung der Anlage einsetzbar ist, **dadurch gekennzeichnet,** daß es sich um ein ternäres Gemisch handelt, welches im wesentlichen besteht aus:
| | |
|---|---|
| Trifluormethan (R23) | 1 % bis 20 % |
| Pentafluorethan (R125) | 1 % bis 70 % |
| Difluormethan (Methylenfluorid; R32) | Rest |

2. Nicht-azeotropes Kühlmittelgemisch nach Anspruch 1, im wesentlichen bestehend aus:
| | |
|---|---|
| R23 | 1 % bis 10 % |
| R125 | 1 % bis 70 % |
| R32 | Rest |

3. Nicht-azeotropes Kühlmittelgemisch nach Anspruch 1, im wesentlichen bestehend aus:
| | |
|---|---|
| R23 | 2 % bis 20 % |
| R125 | 2 % bis 50 % |
| R23 | Rest |

4. Nicht-azeotropes Kühlmittelgemisch nach Anspruch 1, im wesentlichen bestehend aus:
| | |
|---|---|
| R23 | 2 % bis 10 % |
| R125 | 10 % bis 40 % |
| R32 | Rest |

5. Nicht-azeotropes Kühlmittelgemisch, im wesentlichen bestehend aus:
| | |
|---|---|
| R23 | 3 % bis 10 % |
| R125 | 30 % bis 50 % |
| R32 | Rest |

6. Wärmetransferprozess unter Verwendung einer Wärmepumpe, bei dem ein Kühlmittel sukzessive verdampft wird, während einer Wärmequelle Wärme entzogen wird, und kondensiert wird, während einem Aufnahmefluid Wärme zugeführt wird, wobei das Kühlmittel ein nicht-azeotropes ternäres Gemisch ist, das in der Lage ist, in einer Wärmepumpe eingesetzt zu werden, die für R22 oder R502 ausgelegt ist, ohne daß die Wärmepumpe einer Modifizierung bedarf, **dadurch gekennzeichnet,** daß das Gemisch im wesentlichen besteht aus:
| | |
|---|---|
| Trifluormethan (R23) | 1 % bis 20 % |
| Pentafluorethan (R125) | 1 % bis 70 % |
| Difluormethan (Methylenfluorid; R32) | Rest |

7. Wärmetransferprozess nach Anspruch 6, bei dem das Kältemittelgemisch im wesentlichen besteht aus:
| | |
|---|---|
| R23 | 1 % bis 10 % |
| R125 | 1 % bis 70 % |
| R32 | Rest |

8. Wärmetransferprozess nach Anspruch 6, bei dem das Kühlmittelgemisch im wesentlichen besteht aus:
| | |
|---|---|
| R23 | 2 % bis 20 % |
| R125 | 2 % bis 50 % |
| R23 | Rest |

9. Wärmepumpe, **gekennzeichnet durch** ein Kühlmittel nach Anspruch 1.

10. Wärmepumpe, **gekennzeichnet durch** ein Kühlmittel nach Anspruch 2.

11. Wärmepumpe, **gekennzeichnet durch** ein Kühlmittel gemäß Anspruch 3.

12. Wärmepumpe, **gekennzeichnet durch** ein Kühlmittel nach Anspruch 4.

## Revendications

1. Mélange réfrigérant non azéotrope, apte à être utilisé dans un équipement conçu pour R22 ou R502 sans modification dudit équipement, caractérisé en ce qu'il s'agit d'un mélange ternaire constitué essentiellement de:
| | |
|---|---|
| trifluorométhane (R23) | 1 % à 20 % |
| pentafluoroéthane (R125) | 1 % à 70 % |
| difluorométhane (fluorure de méthylène; R32) | le reste. |

2. Mélange réfrigérant non azéotrope selon la revendication 1, constitué essentiellement de:
| | |
|---|---|
| R23 | 1 % à 10 % |
| R125 | 1 % à 70 % |
| R32 | le reste. |

3. Mélange réfrigérant non azéotrope selon la revendication 1, constitué essentiellement de:
| | |
|---|---|
| R23 | 2 % à 20 % |
| R125 | 2 % à 50 % |
| R32 | le reste. |

4. Mélange réfrigérant non azéotrope selon la revendication 1, constitué essentiellement de:
| | |
|---|---|
| R23 | 2 % à 10 % |
| R125 | 10 % à 40 % |
| R32 | le reste. |

5. Mélange réfrigérant non azéotrope constitué essentiellement de:
| | |
|---|---|
| R23 | 3 % à 10 % |
| R125 | 30 % à 50 % |
| R32 | le reste. |

6. Procédé de transfert thermique utilisant une pompe à chaleur, et dans lequel un réfrigérant est successivement évaporé, tout en extrayant une chaleur d'une source de chaleur, et est condensé tout en délivrant de la chaleur à un fluide récepteur, le réfrigérant étant un mélange ternaire non azérotrope apte à être utilisé dans une pompe à chaleur conçue pour R22 ou R502 sans modification de la pompe à chaleur, caractérisé en ce que ledit mélange est constitué essentiellement de:
| | |
|---|---|
| trifluorométhane (R23) | 1 % à 20 % |
| pentafluoroéthane (R125) | 1 % à 70 % |
| difluorométhane (fluorure de méthylène; R32) | le reste. |

7. Processus de transfert thermique selon la revendication 6, dans lequel ledit mélange réfrigérant est constitué essentiellement par
| | |
|---|---|
| R23 | 1 % à 10 % |
| R125 | 1 % à 70 % |
| R32 | le reste. |

8. Processus de transfert thermique selon la revendication 6, dans lequel ledit mélange réfrigérant est constitué essentiellement par
| | |
|---|---|
| R23 | 2 % à 20 % |
| R125 | 2 % à 50 % |
| R32 | le reste. |

9. Pompe à chaleur, caractérisée en ce qu'elle contient un réfrigérant tel que revendiqué selon la revendication 1.

10. Pompe à chaleur, caractérisée en ce qu'elle contient un réfrigérant tel que revendiqué selon la revendication 2.

11. Pompe à chaleur, caractérisée en ce qu'elle contient un réfrigérant tel que revendiqué selon la revendication 3.

12. Pompe à chaleur, caractérisée en ce qu'elle contient un réfrigérant tel que revendiqué selon la revendication 4.
